# EUROPEAN PATENT APPLICATION

(11) **EP 0 776 748 A2**
(43) Date of publication of application: **04.06.1997**
(21) Application number: 96118880.2
(22) Date of filing: 26.11.1996
(51) Int. Cl.: B29C 37/00

(54) **Process for preparing colour contrasts on articles obtained by molding from polymerizable compositions**

(30) Priority: 30.11.1995 IT MI952514
(71) Applicant: ATOHAAS HOLDING C.V., 2034 MB Haarlem (NL)
(72) Inventor: Marciandi, Franco, RHO, Milano (IT); Bertani, Marco, RHO, Milano (IT); Zanzottera, Giorgio, Nerviano, Milano (IT)
(74) Representative: Sama, Daniele, Dr.

(57) **Abstract**

Molding process of articles having colour contrast areas on the surface comprising the coating of the surface with a colored composition polymerized before filling the mold with a polymerizable fluid composition wherein the colored composition is a fluid, stable and redispersable dispersion, comprising:
a) polymerizable liquid monomers, optionally in admixture with a non-polymerizable volatile organic solvent, as a solvent;
b) from 0.1 to 10% by weight of a colouring composition as inorganic pigment or from 0.0001 to 1% by weight of a pigment or organic dye;
c) from 1 to 30% by weight of an acrylic resin soluble in the solvent a) and containing reactive functional groups capable of giving crosslinking,
the component a) being at least 20% by weight of the total composition.

## Description

The present invention relates to a process for obtaining a colour contrast on a molded article surface and to the paint composition for obtaining the colour contrast.

More particularly the composition containing the colour is applied in a specific area of the mold surface where the article is to be formed by using a polymerizable composition.

It is known in the art that by molding techniques it is possible to obtain articles having a high surface finishing by using dispersions of a filler in a polymerizable liquid.

These polymerizable compositions are well known in the art and are fluid dispersions formed by polymerizable monomers based on methylmethacrylate containing high amounts of filler. See for instance **European patent 321193**, or **US Patent 3,324,074,** wherein the dispersions are obtained by using as a dispersant a silane monomer.

Other types of compositions are known wherein a polymeric dispersant is used for obtaining dispersions (see for instance **GB Patent 1,493,393**).

The feature of the dispersions obtained according to the above patents reside in that, though they contain a high amount of mineral filler, they are stably deflocculated or easily redispersable in the polymerizable monomer contained therein when the filler sedimentation occurs.

These compositions are utilized to form molded articles such as sanitary articles in general, endowed with the essential feature to have a high finishing surface.

It is also known to supply finished surfaces of molded articles having a colour contrast on the item surface.

The problems in this type of colour contrasts are that the pigmented composition when applied on the mold must not be washed off at the time of the injection of the polymerizable composition which has to form the finished item.

The finished item with colour contrast must have uniform colouring on the colored surface, exactly reproducing the imprint previously put on the mold, i.e. it must not show areas wherein the colour is missing or others wherein the colour has a different shade.

The methods known in the art to obtain the colour contrast in the art are represented by **EP Patents 61245 and 217544**.

In EP 61245 the composition for the colour contrast requires, as an essential element, to contain a mixture of a finely subdivided filler, such as silica. In the patent it is shown with comparative examples that if the filler, for example silica, is missing, it is not possible to obtain an homogeneous colour contrast, but surfaces are obtained wherein colour variations and dishomogeneities appear. From the industrial point of view the products obtained in the absence of silica have no utility.

In EP patent 217544, compared with EP 61245, are described compositions which would represent an improvement of the previous patent described above and in particular would avoid any possibility to obtain dishomogeneous surfaces. The colour contrast compositions are characterized in that they contain as an essential element a siccative alkyd resin and that the presence of silica for obtaining an homogeneous colored surface is no longer necessary, the silica being an optional component.

Tests carried out by the Applicant have shown that many kinds of paints indicated as suitable in the two patents are not capable to supply homogeneous surfaces which can have an industrial utility even in the presence of silica mineral filler. Moreover, also the resins giving the most homogeneous surfaces show surface defects in the point wherein the polymerizable composition is injected.

The technical problems posed on the above mentioned patent applications have not yet found, therefore, a satisfactory technical solution.

In a previous patent application of the Applicant, see **European patent application No. 95108221.3**, colored compositions have been described to be utilized in the colour contrast techniques indicated above, allowing to obtain homogeneous surfaces also in the injection point of the polymerizable composition, which comprised as essential component a particular type of polymer as film-forming agent formed by an unsaturated polyester resin.

The Applicant has unexpectedly and surprisingly found another specific kind of polymer as film-forming agent, as essential component of the colored composition., to obtain colour contrasts with homogeneous surfaces also in the injection point of the fluid polymerizable composition.

Object of the present invention is a molding process of articles having areas of colour contrast on the surface comprising the coating of the surface or of part of the surface of the mold with a colored composition polymerized before filling the mold with a polymerizable fluid composition wherein the colored composition is a fluid, stable and redispersable dispersion, which comprises:
a) polymerizable liquid monomers, optionally in admixture with a non-polymerizable volatile organic solvent, as solvent;
b) from 0.1 to 10% by weight of a colouring composition as inorganic pigment or from 0.0001 to 1% by weight of a pigment or organic dye;
c) from 1 to 30% by weight of an acrylic resin soluble in the solvent a) and containing reactive functional groups capable of giving crosslinking;
optionally comprising one or more of the following components:
d) from 5 to 70% by weight on the total composition of a finely subdivided filler, having an average diameter from 0.5 to 10 micron, preferably from 2 to 6 micron;
e) a polymeric viscosity regulator soluble in the solvent a) in concentrations from 0.1 to 20% by weight,
f) other polymeric or non polymeric additives, in amounts < 5% by weight on the total of the components, acting as dispersants of the filler d), diluents, latent solvents, polymerization inhibitors, molecular weight regulators, polymerization activators, surfactants, film-forming agents; crosslinking agents;
the component a) being at least 20% by weight of the total composition.

The components used in paints and in dispersions are obviously utilizable.

It is preferable that inorganic fillers are present to obtain a reduction of shrinkage phenomena during polymerization of the polymerizable composition to obtain the finished article and to increase the surface hardness of the painted object.

In the preferred compositions the components vary in the following ranges:
a) from 30 to 60% by weight;
b) from 2 to 6% by weight in case of inorganic pigments and from 0.01 to 0.5% by weight in case of organic pigments;
c) from 1.5 to 10% by weight. For the optional components the preferred ranges are:
d) from 20 to 50% by weight;
e) from 1 to 10% by weight.

According to the present invention it is meant by filler an insoluble reinforcing substance added to the pigmented composition to confer mechanical properties to the colored surface without having any relevant effect on the colour.

Both organic and inorganic pigments which can be used are those known in the art. The dispersion of such pigments may be favoured by the presence of small amounts of surfactants, for instance of alkylphenolethoxylates, polyglycols, stearates, etc.

Also the reinforcing fillers which may be used are well known and are described for instance in a previous patent application EP 321193 of the Applicant, in particular the sizes must be in the range lower than 20 micron, with an average diameter between 0.5 and 10 micron, preferably from 2 to 6 micron.

The acrylic resins of the present invention are well known in the art.

They can be subdivided in two main classes: thermosetting and thermoplastic.

The thermosetting resins usually have a low molecular weight and pending reactive groups from the chain such as to allow a further crosslinking; the thermoplastic ones have a much higher molecular weight and generally show few reactive groups serving to confer adhesion properties. According to the present invention also thermoplastic resins must contain reactive groups in a number equal to that of the thermosetting resins. The amount of functional groups, e.g., -OH, -COOH, expressed as % by weight on the dried resin, is comprised between 1.5-25, preferably 2-10, more preferably 3-6. Preferably thermosetting resins are employed.

The acrylic polymers are obtained by polymerization reaction wherein a peroxide is usually utilized in the spark starting phase.

The acrylic monomers have the general formula

CH₂=CRX

wherein
R can be hydrogen (acrylic monomers), or CH₃ (methacrilic monomers);
X = COOH, COOR', wherein R' contains from 1 to 20 carbon atoms.

Examples of acrylic monomers are acrylic, methacrylic acid; the esters of the acrylic or methacrylic acid are: methylacrylate, ethylacrylate, isopropylacrylate, butyl(meth)acrylate, lauryl-, decyl- undecyl-, propyl-, stearyl(meth)acrylate, methylmethacrylate, isopropylmethacrylate, sec-butylmethacrylate, ter-butylmethacrylate, 2-ethylhexylacrylate, hydroxyalkyl(meth)acrylate with the alkyl from 2 to 5 carbon atoms, etc.

Various types of functionality can be present in acrylic or methacrylic monomers and be therefore present in the final acrylic resin.

The most commonly known and utilized functional groups to give crosslinking are hydroxy, carboxylic, amidic and epoxy groups.

Carboxylic groups are represented by acrylic and methacrylic acid as indicated above.

The hydroxy groups are for instance represented by 2-hydroxyethyl(meth)acrylate having the formula CH₂=CR-CO-O-CH₂CH₂OH, R = H, CH₃ or by 2-hydroxypropyl(meth)acrylate.

Among epoxy groups it can be cited glycidyl(meth)acrylate, having formula 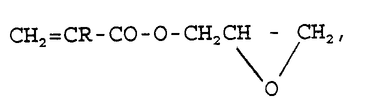 preferably glycidylmethacrylate, less toxic than glycidylacrylate.

Among amides, (meth)acrylamide having the formula CH₂=CR-CO-NH₂ can be mentioned.

Other groups which can be mentioned for illustrative purposes are amines, isocyanate, n-methylolether, etc.

The acrylic polymers, homopolymers and copolymers described above, can also contain units derived from other monomers containing double bonds such as styrene, alpha-methylstyrene, vinylacetate, vinylpropionate and the esters of versatic acid, acrylonitrile, n-alkyl or aryl maleimides, etc., or from monomers with double unsaturation such as, for instance, butadiene, ethylenglycoldi(meth)acrylate, propylenglycoldi(meth)acrylate, trimethylolpropantri(meth)acrylate, etc.

The thermosetting acrylic resins, as already said, are similar to the thermoplastic acrylic resins with the difference that they contain the so called functional monomers in the mixture of monomers so as to give pending functional groups from the polymeric chain.

The molecular weight of thermosetting acrylic resins in general is lower since the molecular weight increases during the crosslinking reaction.

Having lower molecular weight, thermosetting acrylic resins are easier to be dissolved in solvents and may be formulated as high dry dispersions.

The pending reactive groups from the chain can be the following: 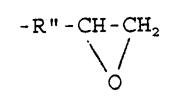 (R'' is part of the glycidyl residue),
-R''-NH-CH₂-OH (R'' is part of methylol residue),
-R''-NH-CH₂-O-R''' (R'' is part of alkylmethylol residue), 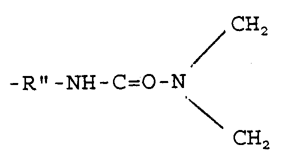
(R'' is part of ethyleneureido residue),
-R''-C=O-O-NH-R''-NH-O-R''' (R'' is part of urethane residue),
R''' being an alkyl from 1 to 20 carbon atoms;
-R''-CO-OH (R'' is part of carboxylic group residue),
-R''-CH₂-OH (R'' is part of hydroxylic group residue),
-R''-NH₂ (R'' is part of aminic group residue),
-R''-CO-NH₂ (R'' is part of amidic group residue),
-R''-O-CO-NH₂ (R'' is part of carbamate group residue).

The comonomers producing the pending groups in the polymeric chain are in amounts generally lower than 10%, preferably lower than 5%, and preferably 1-3%.

The thermosetting acrylic resins are crosslinked either by addition of catalysts, usually acids or aminic, to give the desired crosslinking degree, or by heat or by means of peroxides.

The acrylic resins utilizable according to the present invention are known in commerce and can be mentioned for example the acrylic resins containing epoxy groups modified with fatty acids such as ACTILANE^{(R)} 310 of the firm AKCROS, acrylic resins containing di-functional epoxy groups such as ACTILANE^{(R)} 320, acrylic resins containing OH groups such as JAGOTEX^{(R)} F 232 of Ernst Jaeger.

The component a) of the polymerizable monomer type is indicated hereafter. As already said, a) can be used also in admixture with a non-polymerizable solvent. This latter must be sufficiently volatile to be removed for the most part before introducing the hardenable composition; in any case it must be a solvent for the acrylic resin.

Examples of non-polymerizable solvents are aromatic hydrocarbons, ketones, saturated esters, ethers, etc.

The polymeric viscosity regulator component is a preformed polymer and compatible with the polymer obtained by polymerization of component a), and yet such as not to significantly reduce the physical properties of the colored coating. Well known examples of polymers utilized for the viscosity variation also when employed in small amounts, at most up to 20% by weight with respect to monomer a), more preferably from 1 to 10%, are homopolymers or copolymers of methylmethacrylate with other comonomers, in amounts up to 40% by weight, preferably up to 10% by weight. For instance they are polymethylmethacrylate, methylmethacrylate/methyl or ethyl acrylate copolymers, methylmethacrylate/styrene copolymers.

They have generally average molecular weight comprised between 10,000 and 1,000,000, preferably betwen 20,000 and 100,000.

The additives f) comprise additives of common use in the technique of paints dispersions. For instance polymeric or non polymeric dispersants of the dye and of the filler d), when present. It can be mentioned for instance as polymeric dispersants: copolymers of methylmethacrylate/methacrylic acid, methylmethacrylate/alkoxy silanes containing double bonds copolymers, for instance, gamma-methacryloxy-propyltrimethoxysilane (A 174, commercialized by Union Carbide), etc. As non polymeric dispersants, alkoxy silanes, in particular A-174, can be mentioned. These agents can also act as film-forming agents, described hereinunder. The polymeric dispersants are for instance described in **UK patents 1,493,393, UK 1,328,136, EP 321193**.

The molecular weight of the polymeric dispersants can be regulated, if desired, by introducing molecular weight regulators, for instance mercaptanes, terpenes, etc., in amounts comprised between 0.01 and 1% by weight. The intrinsic viscosity η of the polymeric dispersants is preferably comprised between 20 and 300 l/g. Other additives f) are latent solvents to regulate the formation of the colored coating; polymerization inhibitors of the type usually employed for acrylic monomers, such as for instance hindered phenols, quinones, quinonethers; molecular weight regulators intervening in the phase of the film formation by regulating the molecular weight of the film itself, such as for instance mercaptanes, terpenes, etc., polymerization activators such as for instance carboxylic acids salts, among which fatty acids (the well known metal soaps), octoates, acetylacetonates, naphthenates of cobalt, calcium, zirconium, barium, lead, cerium, selenium; preferably cobalt salts are employed; surfactants as wetting agents for dyes and fillers, such as for instance alkylphenolethoxylates, diluents are the same of component a).

The film-forming agents of polymeric type are well known in the art of pigments and contain monomers conferring elasticity to the polymer. It can be cited the polysiloxanes. They can be used for instance in amounts of 0.5-10% by weight, preferably < 5% by weight.

The crosslinking agents, which preferably are contained in the composition of the present invention, are monomers with two or more double bonds well known in the art, such as for instance ethylenglycoldimethacrylate (EGDM), tetraethylenglycoldimethacrylate (TEGDM), trimethylolpropanetrimethacrylate, etc..

The amount of crosslinking agent is the usual one in the art, generally between 0.05 and 4% by weight, preferably between 0.1 and 2% by weight.

The polymerizable composition to be utilized for the formation of the finished article is a fluid, stable, redisperseable and hardenable dispersion formed by at least a polymerizable liquid monomer, a finely subdivided mineral filler, a silanizing agent for the mineral filler, and an hydrolysis catalyst of the silanizing agent chosen e.g. from the ammonium salts of organic acids.

The polymerizable monomers are preferably alkylic esters of the acrylic or methacrylic acid, wherein the alkylic group contains from 1 to 6 carbon atoms. Preferred example is methylmethacrylate alone or in admixture with other acrylic, vinylic or styrenic monomers, up to 50% by weight.

As comonomers ethylmethacrylate, propylmethacrylate, styrene, etc. can be mentioned.

These polymerizable monomers are the same also utilizable as component a) of the colored composition.

The mineral fillers are inorganic substances having hydrophilic surfaces characterized by the presence of polar groups, preferably hydroxyl groups. Examples are amorphous or crystalline silica, alumina, alumina trihydrate, mineral silicates, oxides.

It is preferred that the fillers have a spheroidal or granular form, the employment of needle-shaped particles however not being excluded.

The fillers above mentioned are maintained stably dispersed in the polymerizable monomer by silanization of the surface.

Examples of silanes used for silanization are methyltriethoxysilane, gamma-methacryloxypropyltrimethoxysilane, vinyltriethoxysilane, etc.

The fluid polymerizable compositions here summarized are described in detail in EP patent 321193 herein incorporated by reference.

As examples of fluid polymerizable compositions utilizing polymeric dispersants are those for instance of UK patent 1493393 herein incorporated by reference.

The polymerizable fluid compositions generally have low viscosities, of the order of 100-1,000 cPoise, preferred 400-800 cPoise, even though they can be utilized up to higher viscosities, generally of 2,000-5,000 cPoise.

The colored compositions of the invention when applied to the mold surface give a layer which remains attached to the mold surface during the successive filling with the polymerizable fluid composition, becoming integral part of the molded article during the hardening of the polymerizable fluid composition.

The process for the achievement of molded materials with colour contrast comprises therefore the application of the colored composition of the invention, containing the desired contrast colour on the desired mold surface, achievement of the coating and subsequent introduction of the polymerizable fluid composition to obtain the molded item.

To obtain the coating of the colour composition it is added, before applying to the mold surface, a polymerization initiator of radical type, as hereunder defined, of the same type as the one utilized for the polymerization of the polymerizable fluid dispersion to obtain the finished item.

The amounts of initiator are generally comprised between 0.01 and 2% of the total composition.

Also a polymerization accelerator can be used as activator, as already described above.

During the polymerization, a molded finished item having the chosen surface parts colored is therefore obtained.

The polymerization of the polymerizable composition is carried out with initiators as said above, of radical type, for instance peroxides with decomposition temperature near those of the mold on which the colored composition is applied.

The peroxides can be utilized also in admixture with each other, by using their different times of semitransformation (decomposition) in order to obtain a continuous polymerization in various temperature ranges.

The temperature is generally comprised between 50°C and 100°C.

Examples of peroxides are di(4-t.butylcyclohexyl)peroxydicarbonate, benzoylperoxide, etc.

For the preparation of the item, the mold is maintained at high temperature during the coating process with the colored compositions and during the subsequent filling of the mold with the polymerizable fluid composition.

After hardening, the finished item is removed from the hot mold. The application of the colored composition for the production of the successive item is carried out immediately.

The colored compositions of the present invention have the advantage to be hardened in a relatively short time, it is sufficient to let the coating dry for about 5 minutes after being sprayed, wherefore the filling operation with the polymerizable fluid composition can be very quick.

As already said the introduction of the polymerizable fluid composition does not cause any colour modification or washing off of the colored surface also in the point of higher speed, i.e. in the point of introduction of the polymerizable fluid composition.

The fillers and the polymerizable monomers of the colored compositions of the present invention are preferably the same of the polymerizable composition forming the finished item.

The following examples are given for illustrative purpose and are not limitative of the scope of the present invention.

### EXAMPLE 1

### Preparation of the colouring composition MMA/γ-methacryloxypropyltrimethoxysilane copolymer (dispersing agent)

It was obtained by mass polymerization at T = 80°C with weight ratio 98:2, utilizing as molecular weight regulator octylbutylmercaptane (OBM) in amounts of 0.2% by weight and as polymerization initiator the lauroyl peroxide (LAUROX) in amounts of 1% by weight, and subsequently finely milled.

The weight average molecular weight M_{w} was 100,000.

### Polysiloxane (film-forming agent)

In a 500 cc flask are added, under stirring, 100 g of gamma-methacryloxypropyltrimethoxysilane (silane A 174 of Union Carbide), 100 g of CH₃OH, 40 g of distilled water, 1 g of catalyst of isopropylamine.

It is reacted for 24 hours and the dense layer of polysiloxane is separated in a separatory funnel.

### MMA/methacrylic acid (AMA) copolymer (polymeric dispersant)

It was prepared by polymerization in aqueous suspension with weight ratio 98:2. The weight average molecular weight was 200,000.

### Preparation of the methacrylic syrup

In a 2 l glass reactor the following components are mixed under stirring for 5 hours until dissolution of the (co)polymers.

| | % by wt. |
|---|---|
| - inhibited MMA with 200 ppm of TOPANOL^{(R)} A (2,4-dimethyl-6-t.butylphenol) | 90 |
| - MMA/methyl acrylate copolymer with intrinsic viscosity 65 ml/g ALTUGLAS^{(R)} 9E | 5.32 |
| - MMA/AMA copolymer 98:2 by weight (prepared above) | 1.36 |
| - MMA/silane A174 copolymer 98:2 by weight (prepared above) | 1.36 |
| - EGDM (ethylenglycoldimethacrylate) | 1.36 |
| - terpinolene | 0.6 |

### Preparation of the colouring paste

In a 2 l vessel with a high speed dispenser TURAX^{(R)} type, the following coloring paste comprising the following components is prepared by stirring for 10 minutes:

| | % by wt. |
|---|---|
| - JAGOTEX^{(R)} F 232 of the firm JAEGER CHEMIE (hydroxylated acrylic resin at 60% by weight in xylene/solvesso/butyl acetate in 2:1:1 ratio) | 33.7 |
| - Nonylphenolethoxylate | 1.28 |
| - TiO₂ white (of REPI) | 7.0 |
| - Iron oxide red (of Bayer 130 M) | 10.5 |
| - Light yellow 3R (of Bayer) | 46.4 |
| - Vulcan P Black (of Cabot) | 1.1. |

The acrylic resin of this example is an acrylic resin containing OH groups, the percent by weight of OH on the solid resin is 3.6.

The obtained mixture is passed twice on a three cylinder refiner to improve the pigment dispersion.

### Preparation of the colouring dispersion - I phase

In a 5 l jar with ceramic balls the following additives in parts by weight for 100 parts by weight of composition, are mixed:

| | parts by wt. |
|---|---|
| - methacrylic syrup (prepared above) | 47.96 |
| - polysiloxane (prepared above) | 1.85 |
| - coloring paste (prepared above) | 4.76 |
| - acrylic resin JAGOTEX F232 of JAEGER CHEMIE | 0.98 |
| - nonylphenolethoxylate | 0.14 |
| - finely subdivided silica (SICRON^{(R)} B 800 of Sibelco) | 37.93 |

The mixture is rolled for 16 hours and then (II phase) is added with:

| | parts by wt. |
|---|---|
| - hydroxyethylmethacrylate (HEMA) | 0.98 |
| - trimethylolpropantrimethacrylate (TMPTM) | 0.2 |
| - MMA (containing 200 ppm of TOPANOL^{(R)} | 5.10 |
| - stearate zinc | 0.1. |

The paint after 2 hours of mixing is used for forming the colour contrast.

### Application test

16 g of paint obtained above are diluted with 4 g of a mixture of non polymerizable solvents (butyl acetate, butylcellosolve, Solvesso 100) and added with 0.08 g of PERKADOX^{(R)} 16 (bis-4-ter-butylcyclohexylperoxydicarbonate).

It is stirred until PERKADOX^{(R)} dissolves and the paint is then sprayed by aerograph with 0.7 mm nozzle on a part (male) of the nickel-plated mold, maintained at 80°C by water circulation. The spraying pressure was 2.5 atm. It is dried for 5 minutes.
The mold is then closed and filled with the acrylic dispersion obtained according to example 2 of EP Patent 321193, to which 0.6% by weight of PERKADOX^{(R)} 16 and 0.15 % of stearic acid have been added.

The temperatures of the mold male and female are respectively 80°C and 70°C, by water circulation.

The temperature is then increased, after 10' gradually to 90°C both for the male and for the female.

It is maintained for 20 minutes at this temperature, then the male is cooled by cold water circulation and the mold is opened.

The molded article consists in a parallepiped-shaped bowl having mm 240 x 240 x 180 sizes and 10 mm thickness. It reports perfectly reproduced and incorporated the part of the contrast paint previously sprayed on the metal mold, without traces of surface washing off.

The colour results perfectly homogeneous in the surface part of molded article.

### COMPARATIVE EXAMPLE 1A (to be compared with Example 1)

Example 1 was repeated wherein a corresponding amount of alkyd resin long-oil type SC 63 by the firm Benasedo (70% dry, in white spirit) was utilized instead of the acrylic resin of Example 1.

The application test on mold has pointed out in the contrast colored surface some points wherein the paint was not present.

These areas are near the inlet point of the polymerizable fluid composition.

With respect to the finished article of Example 1, this item cannot be used commercially.

### COMPARATIVE EXAMPLE 1B (to be compared with Example 1)

Example 1 was repeated by using instead of the acrylic resin of Example 1, a corresponding amount of epoxy resin (epoxyester resin) EPOBEN^{(R)} L by Benasedo.

The application test has shown that it is not possible to obtain a colour contrast as the resin is washed off when the polymerizable fluid composition is introduced, the surface part which has not been washed off shows dishomogeneity.

### EXAMPLE 2

Example 1 is repeated but by utilizing as acrylic resin ACTILANE^{(R)} 310 of Akcros Chemicals in the same quantity in parts by weight as indicated in the I phase of Example 1 instead of the resin JAGOTEX F232. The acrylic resin ACTILANE^{(R)} 310 is an acrylic resin containing epoxy groups modified with fatty acids.

By operating under the same conditions of Ex. 1 a bowl of optimal aesthetic aspect is obtained.

The results are similar to those of Example 1.

### EXAMPLE 3

Example 1 is repeated but by utilizing as acrylic resin ACTILANE^{(R)} 320TM25 of Akcros Chemicals in the same quantity in parts by weight as indicated in the I phase of Example 1. The acrylic resin ACTILANE^{(R)} 320TM25 is an acrylic resin containing epoxy groups.

By operating under the same conditions of Ex. 1 a bowl of optimal aesthetic aspect is obtained.

The results are similar to those of Example 1.

### EXAMPLE 4

Example 1 is repeated but utilizing as acrylic resin ACTILANE(R) 320TP20 of Akcros Chemicals in the same quantity in parts by weight as indicated in the I phase of Example 1. The acrylic resin ACTILANE^{(R)} 320TP20 is an acrylic resin containing epoxy groups.

By operating under the same conditions of Ex. 1 a bowl of optimal aesthetic aspect is obtained.

The results are similar to those of Example 1.

## Claims

1. Molding process of articles having colour contrast areas on the surface comprising the coating of the surface or of part on the surface of the mold with a polymerized colored composition before filling the mold with a polymerizable fluid composition wherein the colored composition is a fluid, stable and redispersable dispersion, which comprises:
a) polymerizable liquid monomers, optionally in admixture with a non-polymerizable volatile organic solvent, as a solvent;
b) from 0.1 to 10% by weight of a colouring composition as inorganic pigment or from 0.0001 to 1% by weight of a pigment or organic dye;
c) from 1 to 30% by weight of an acrylic resin soluble in the solvent a) and containing reactive functional groups capable of giving crosslinking,
the component a) being at least 20% by weight of the total composition.

2. Molding process of articles having colour contrast areas according to claim 1 optionally comprising one or more of the following components:
d) from 5 to 70% by weight on the total composition of a finely subdivided filler, having an average diameter from 0.5 to 10 micron, preferably from 2 to 6 micron;
e) a polymeric viscosity regulator soluble in the solvent with concentrations from 0.1 to 20% by weight,
f) other polymeric or non polymeric additives in amounts < 5% by weight on the total of the components acting as dispersants of the filler d), diluents, latent solvents, polymerization inhibitors, molecular weight regulators, polymerization activators, surfactants; film-forming agents; crosslinking agents.

3. Molding process of articles having colour contrast areas according to claim 2, wherein:
a) from 30 to 60% by weight;
b) from 2 to 6% by weight in case of inorganic pigments and from 0.01 to 0.5% by weight in case of organic pigments;
c) from 1.5 to 10% by weight.
d) from 20 to 50% by weight;
e) from 1 to 10% by weight.

4. Molding process of articles having colour contrast areas according to claims 2 and 3 wherein the filler has an average diameter from 0.5 to 10 micron.

5. Molding process of articles having colour contrast areas according to claims 1-4 wherein the acrylic resins contain pending functional groups of the main chain, expressed as % by weight of functional group comprised between 3 and 6.

6. Molding process of articles having colour contrast areas according to claim 5 wherein the functional groups are hydroxyl, carboxyl, amidic, epoxy groups.

7. Molding process of articles having colour contrast areas according to claims 1-6 wherein the polymerizable fluid composition has viscosity from 400 to 800.

8. Molding process of articles having colour contrast areas according to claims 1-7, wherein the utilized acrylic resin is a thermosetting resin.

9. Colored compositions according to claims from 1 to 8.
